# EUROPEAN PATENT SPECIFICATION

(11) **EP 3 806 407 B1**
(45) Date of publication and mention of the grant of the patent: **18.11.2026**
(21) Application number: 19812571.8
(22) Date of filing: 21.05.2019
(51) Int. Cl.: H04L 45/64, H04L 45/02, H04L 67/10, H04L 67/563

(54) **METHOD, SYSTEM, AND ROUTING DEVICE FOR ESTABLISHING NETWORK**
VERFAHREN, SYSTEM UND ROUTING-VORRICHTUNG ZUM AUFBAU EINES NETZWERKS
PROCÉDÉ, SYSTÈME, ET DISPOSITIF DE ROUTAGE PERMETTANT D'ÉTABLIR UN RÉSEAU

(30) Priority: 31.05.2018 CN 201810550604
(43) Date of publication of application: 14.04.2021
(73) Proprietor: Cloud Intelligence Assets Holding (Singapore) Private Limited, Singapore 189554 (SG)
(72) Inventor: ZHU, Shunmin, Hangzhou, Zhejiang 311121 (CN); CHENG, Gang, Hangzhou, Zhejiang 311121 (CN); ZHAO, Wei, Hangzhou, Zhejiang 311121 (CN); HUANG, Weiting, Hangzhou, Zhejiang 311121 (CN); WEN, Shuguang, Hangzhou, Zhejiang 311121 (CN)
(74) Representative: Abel & Imray LLP
(86) International application number: PCT/CN2019/087690
(87) International publication number: WO 2019/228216

(56) References cited:
- WO-A1-2014/140941
- CN-A- 102 710 965
- CN-A- 105 681 075
- CN-A- 105 681 075
- CN-A- 106 571 992
- TARIK TALEB ET AL: "MobileCloud Networking - D3.1 Infrastructure Management Foundations – Specifications & Design for Mobile Cloud framework", DELIVERABLES OF MOBILECLOUD NETWORKING - FP7-ICT--2011-08 EUROPEAN PROJECT, 8 November 2013 (2013-11-08), pages 1 - 255, XP055298623, Retrieved from the Internet <URL:http://sinakhatibi.com/wp-content/uploads/2015/06/MCN_D3.1_Final.pdf> [retrieved on 20160830]
- HUANG SHUFENG ET AL: "Network Hypervisors: Managing the Emerging SDN Chaos", 2013 22ND INTERNATIONAL CONFERENCE ON COMPUTER COMMUNICATION AND NETWORKS (ICCCN), IEEE, 30 July 2013 (2013-07-30), pages 1 - 7, XP032513117, DOI: 10.1109/ICCCN.2013.6614160

## Description

The present application claims priority to Chinese Application No. 201810550604.1, filed on 31 May 2018 and entitled "Network Construction Method, System, and Routing Device".

### Technical Field

The present application relates to the application field of the Internet, and particularly to network construction methods, systems, and routing devices.

### Background

Traditional enterprise private networks are implemented based on various VPN technologies. According to the nature of services, two typical types exist: a first type provided by an operator, with a typical technology being MPLS VPN; and a second type constructed by an enterprise itself, with a typical technology being IPSEC VPN.

Most of the first type requires a dedicated physical link to access an operator's network, and a service provider to provide Quality of Service (QoS) guarantee (such as bandwidth, packet loss, delay, etc.) and service operation and maintenance, which is relatively troublesome to be activated, having a relatively long construction time and a relatively high price, with larger bandwidth and better service. Due to its underlying data forwarding being carried by the Internet and due to the Internet's best-effort forwarding model, the second type cannot provide QoS guarantee, and requires an enterprise to have specialized technical personnel for performing operation and maintenance.

On the other hand, with the emergence of hybrid cloud architecture, an enterprise places its own IT resources on both public and private clouds, in which sensitive data (such as company decisions, bank information, user and employee information) is generally stored in a private cloud internal to the enterprise to ensure data security, and other oriented resources are placed on a public cloud (for example, details of press conferences of the enterprise) to provide services to customers. A connection is made through a network. In order to support the hybrid cloud architecture, service providers of public clouds generally provide two types of interconnection mechanisms to connect resources of the public clouds: first, based on IPSEC VPN; and second, based on a dedicated line access. A dedicated line is a network connection provided by a service provider of a public cloud or a third-party partner (including operators).

However, enterprise private networks provided by operators have the problems of having a high price, having a slow activation process, and failing to be used on demand. However, an enterprise private network operated and maintained by an enterprise has no service quality guarantee. In addition, a direct connection (Direct Connect) method is only used for interconnections between the enterprise and a public cloud, and cannot be used for interconnections between different regions of the enterprise. At present, every Direct Connect needs to be configured manually, and the costs of activation, operation, and maintenance are high.

Tarik Taleb et. al.: "Mobile Cloud Networking - D3.1 Infrastructure Management Foundations - Specifications & Design for Mobile Cloud framework", 2013-11-08, relates to mobile cloud networking and in particular, to infrastructure management in a mobile cloud framework using SDN to separate the network switching functions from the information intensive functions in consideration of Quality of Service QoS requirements. Shufeng Huang et al.: "Network Hypervisors: Managing the Emerging SDN Chaos", 2013-07-30, considers the evolving landscape of low-level and heterogenous SDN network APIs and how they work together. CN105681075A relates to a hybrid cloud platform where a private and a public cloud are connected by a dedicated line, with a software-defined controller to manage network routes, firewall rules, QoS and network data cleaning functions.

In view of the above-mentioned problems of high operation and maintenance costs and low operation efficiency caused by manual configurations of interconnections between different regions of an enterprise and construction issues in hybrid cloud environments in existing technologies, no effective solutions have been proposed.

### Summary

Embodiments of the present invention provide a method, a system, and a routing device for network construction according to the claims, to solve at least the technical problems of high operation and maintenance costs and low operation efficiency caused by manual configurations of interconnections between different regions of an enterprise and construction issues in hybrid cloud environments in existing technologies. The invention is defined by the independent claims. Further embodiments of the invention are defined by the dependent claims. Although the invention is only defined by the claims, the below embodiments, examples and aspects are present for aiding in understanding the background and advantages of the invention.

### Brief Description of the Drawings

The drawings described herein are used to provide a further understanding of the present invention and constitute a part of the present application. The exemplary embodiments of the present invention and descriptions thereof are used to explain the present invention, and are not construed as improper limitations of the present invention. In the accompanying drawings:
FIG. 1 is a block diagram of a hardware structure of a routing device in a network construction method according to the embodiments of the present invention.
FIG. 2 is a flowchart of a network construction method according to a first embodiment of the present invention.
FIG. 3 is a schematic diagram of constructing a network in a network constructing method according to the first embodiment of the present invention.
FIG. 4 is a schematic diagram of performing route learning through a dynamic routing protocol in a network construction method according to the first embodiment of the present invention.
FIG. 5 is a schematic diagram of calculating a route by an SDN controller in a network construction method according to the first embodiment of the present invention.
FIG. 6 is a schematic structural diagram of a network construction apparatus according to a second embodiment of the present invention.

### Detailed Description

In order to enable one skilled in the art to better understand solutions of the present invention, the technical solutions in the embodiments of the present invention will be described clearly and completely in conjunction with the accompanying drawings in the embodiments of the present invention. Apparently, the described embodiments merely represent some and not all of the embodiments of the present invention.

It should be noted that terms "first" and "second", etc., in the description of the present invention and the aforementioned drawings are used to distinguish similar objects, and not necessarily used to describe a specific order or sequence. It should be understood that data used in this way can be interchanged under appropriate situations, so that the embodiments of the present invention described herein can be implemented in an order other than those illustrated or described herein. In addition, terms "containing", "having", and any variations thereof are intended to cover non-exclusive inclusions. For example, a process, method, system, product or device that includes a series of steps or units is not necessarily limited to those explicitly listed steps or units, and may include other steps or units that are not explicitly listed or that are inherent to such process, method, system, product or device.

Technical terms involved in the present application:
IDC: Internet DataCenter.
Public cloud: A cloud computing service that is shared by multiple clients and provided by a third party, which is generally used through the Internet.
Private cloud: A cloud computing service that is owned and used by an enterprise itself only, and runs in a user's data center.
Hybrid cloud: A hybrid of public cloud and private cloud, and resources of an enterprise being distributed on the public cloud and the private cloud at the same time, and connected therebetween through the Internet.
Enterprise private network: An IT service used to connect resources of an enterprise that are distributed in different locations, and serving the enterprise only. It is generally implemented using VPN technology, such as MPLS VPN.
SDN: Software-defined networking, software-defined networking.
CPE: Customer Premise Equipment, customer premise equipment.
User side: Refer to IT facilities and equipment that belong to an enterprise in hybrid cloud architecture.
Site: Refers to a certain place of a user.
QoS: Quality of Service, which generally includes service characteristics such as link delays, packet losses, and jitters.
VPC: Virtual Private Cloud, which is a three-tier network virtualized on a public cloud.
VBR: Virtual Border Router, which is a dedicated line access router.

### First Embodiment

According to the embodiments of the present invention, an embodiment of a network construction method is also provided. It should be noted that steps shown in a flowchart of the accompanying drawings may be executed in a computer system such as a set of computer-executable instructions. Although a logical order is shown in the flowchart, in some cases, steps shown or described may be performed in an order different from the one shown therein.

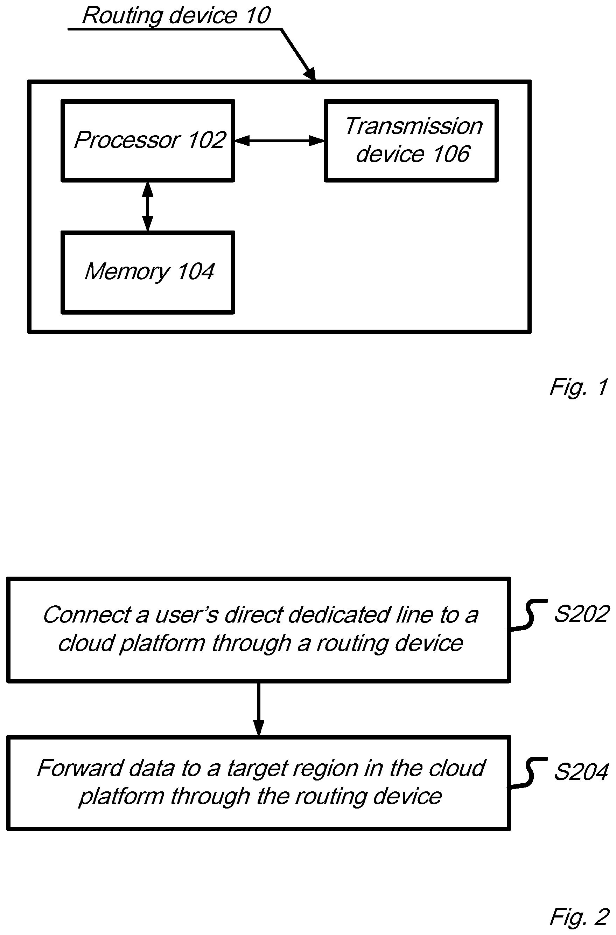

The method embodiment provided in the first embodiment of the present application may be executed in a mobile terminal, a routing device or a similar computing device. Running on a routing device is used as an example. FIG. 1 is a hardware structural block diagram of a routing device in a network construction method according to the embodiments of the present invention. As shown in FIG. 1, a routing device 10 may include one or more (only one is shown in the figure) processors 102 (a processor 102 may include, but is not limited to, a processing device such as a microprocessor MCU or a programmable logic device FPGA), a memory 104 used for storing data, and a transmission device 106 used for communication functions. One of ordinary skill in the art can understand that the structure shown in FIG. 1 is used only for illustration, and is not construed as a limitation to the structure of the above electronic device. For example, the routing device 10 may also include more or fewer components than the one shown in FIG. 1, or have a configuration different from that shown in FIG. 1.

The memory 104 may be used for storing software programs and modules of application software, such as program instructions/modules corresponding to the network construction methods in the embodiments of the present invention. The processor(s) 102 perform(s) various functional applications and data processing by running the software programs and modules stored in the memory 104, i.e., implementing the network construction method of the above-mentioned application program. The memory 104 may include a high-speed random access memory, and may also include a non-volatile memory, such as one or more magnetic storage devices, flash memory, or other non-volatile solid-state memory. In some examples, the memory 104 may further include storage devices deployed remotely with respect to the processor 102, and these remote storage devices may be connected to the routing device 10 through a network. Examples of the network include, but are not limited to, the Internet, a corporate intranet, a local area network, a mobile communication network, and a combination thereof.

The transmission device 106 is used for receiving or sending data through a network. Specific examples of the network may include a wireless network provided by a communication provider of the routing device 10. In an example, the transmission device 106 includes a network adapter (Network Interface Controller, NIC), which can be connected to other network devices through a base station to communicate with the Internet. In an example, the transmission device 106 may be a radio frequency (RF) module, which is used to communicate with the Internet wirelessly.

In the above operating environment, the present application provides a network construction method as shown in FIG. 2. FIG. 2 is a flowchart of a network construction method according to the first embodiment of the present invention.

Step S202: Connect a user's direct dedicated line to a cloud platform through a routing device.

Step S204: Forward data to a target region in the cloud platform through the routing device.

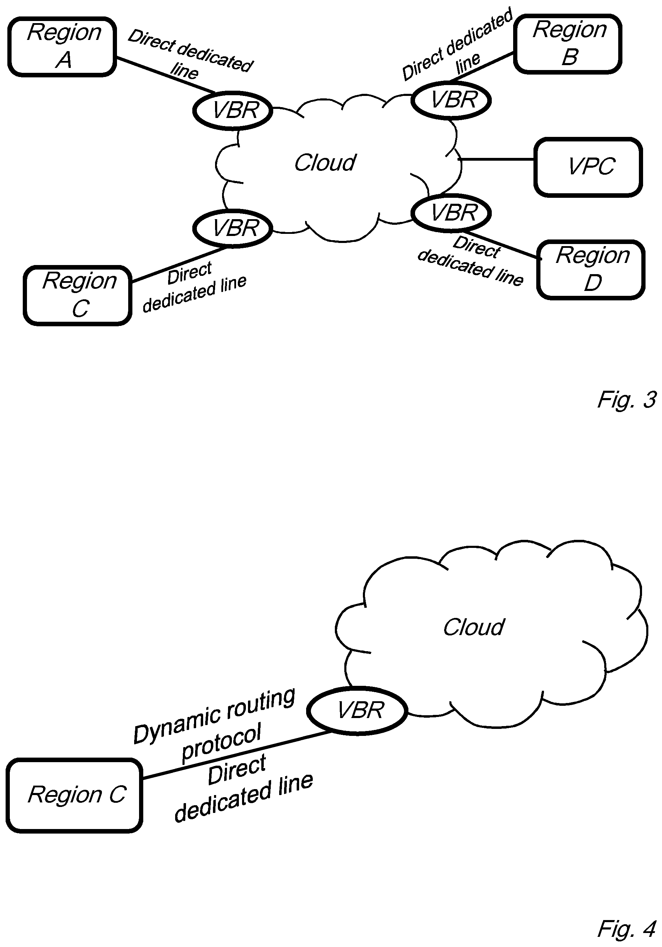

Specifically, in combination with step S202 to step S204, the network construction method provided by the present application is shown in FIG. 3. FIG. 3 is a schematic diagram of network construction in the network construction method according to the first embodiment of the present invention. In FIG. 3, a dedicated line (Direct Connect) of a user is connected to a dedicated line access router VBR (that is, a routing device provided in the present application), and access a cloud network through the VBR.

Terminal devices used by users in FIG. 3 may be located in different places, i.e., site A to site D in FIG. 3. Users in each site can access a cloud network or a virtual private network (VPC) via a routing device VBR through a direct dedicated line. It needs to be noted that VBR that forwards data to a target region in a cloud platform can be located anywhere in a cloud network where the cloud platform is located, such as sites, VPCs, etc., depending on an object to be interacted with. The present application does not have any limitation thereon.

In FIG. 3, VBR can not only forward traffic to vpc or other resources on the cloud, but also forward traffic to other sites of the users. Generally, this kind of forwarding is based on route forwarding, or other Layer 2 forwarding mechanisms (forwarding based on mac or vlan). The network construction method provided in the present application is described using route forwarding as a preferred example, which acts as a reference for implementing the network construction method provided in the present application. Specifics thereof are not limited.

In the embodiments of the present invention, a user's direct dedicated line is connected to a public cloud through a routing device. Data is forwarded to a target region through the routing device, and an enterprise private network is realized through high-speed channels of the public cloud. The user's enterprise private network and high-speed channels of the public cloud are combined into one. Furthermore, an automatic configuration of the user private network is realized through an automatic learning and an automatic distribution of routes, allowing users to quickly open enterprise private networks. This thereby solves the needs for manual configuration of interconnections between different regions of an enterprise and construction problems in hybrid cloud environments that have existed in the existing technologies, which lead to technical problems such as high operation and maintenance costs and low operation efficiency.

Optionally, the routing device includes: a dedicated line access router.

Before connecting the user's direct dedicated line to the cloud platform through the routing device in step S202, the network construction method provided in the present application further includes:
Step S201: Learn routes of a network where a user device is located based on a network controller of a cloud network where the cloud platform is located.

Furthermore, optionally, learning the routes of the network where the user device is located based on the network controller of the cloud network where the cloud platform is located in step S201 includes:
Step S2011: Obtain route(s) of calling a preset application programming interface by the user device.
Step S2012: Obtain, based on the obtained route(s), routes between the routes of the network where the user is located in the cloud network and regions where other users to be interacted are located.

Optionally, learning the routes of the network where the user device is located based on the network controller of the cloud network where the cloud platform is located in step S201 includes:
Step S2013: Obtain route(s) according to a dynamic routing protocol that is operated between the user device and the cloud network.
Step S2014: Perform the learning according to the route(s).

Specifically, in conjunction with step S2011 to step S2014, learning the routes of the user in the network construction method provided by the present application is implemented through two mechanisms, which are specifically as follows:

### First Mechanism (corresponding to step S2011 and step S2012):

A network controller on a cloud provides an application programming interface (Application Programming Interface, which is referred to as API) to users for calling, and routes on the user side are published to the network controller on the cloud. At the same time, API which allows the users to query routes on the cloud and other sites is also provided.

### Second Mechanism (corresponding to step S2013 and step S2014):

A dynamic routing protocol is operated between the user-side CPE (Customer Premise Equipment, wireless terminal access equipment) and the cloud, as shown in FIG. 4. FIG. 4 is a schematic diagram of route learning in the network construction method according to the first embodiment of the present invention. BGP is used as an example for illustration. BGP is the most widely used routing protocol in this scenario. Other routing protocols also include: RIP, RIPng, which are not exhaustively described herein.

It needs to be noted that the above dynamic routing protocol mentioned in the present application is only described as an example, and acts as a reference for implementing the network construction method provided in the present application. Specifics thereof are not limited.

Forwarding the data to the target region in the cloud platform through the routing device in step S204 includes:
Step S2041: Generate a data forwarding strategy based on intercommunication(s) intention of the user obtained in advance by the routing device.
Step S2042: Forward the data to the target region according to the data forwarding strategy, wherein the target region includes one or a combination of at least two of a virtual private network, region(s) where user(s) to be interacted is located, or other cloud resource(s).

Furthermore, optionally, generating the data forwarding strategy based on the intercommunication intention(s) of the user obtained in advance by the routing device in step S2041 includes:
Step S20411: Receive routing information sent by routing devices in respective regions where various users to be interacted are located.
Step S20412: Perform a calculation based the routing information to generate the data forwarding strategy by a software-defined network controller.

Optionally, in step S20412, performing the calculation based the routing information to generate the data forwarding strategy by the software-defined network controller includes:
Step S204121: Perform the calculation based the routing information to generate the data forwarding strategy using a routing controller in the software-defined network controller.

Further, optionally, forwarding the data to the target region according to the data forwarding strategy in step S2042 includes:
Step S20421: Send the data forwarding strategy to a corresponding routing device.
Step S20422: Forward the data to the target region through the routing device.

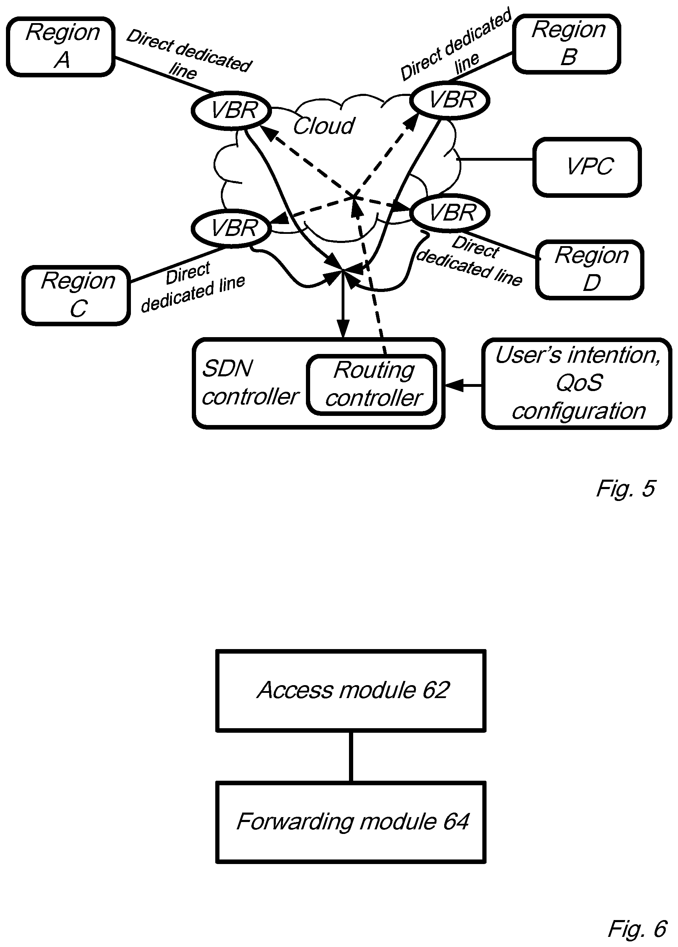

Specifically, in conjunction with the above step S204, in order to support a rapid construction of an enterprise private network, it is necessary to directly calculate routes on system components (VBR and some other components of a public cloud virtual network) according to the users' intentions. For this reason, the network construction method provided by the present application designs a routing controller in a virtual network controller (SDN controller in FIG. 5) to achieve this function. As shown in FIG. 5, FIG. 5 is a schematic diagram of route calculation using a SDN controller in the network construction method according to the first embodiment of the present invention.

As can be seen from FIG. 5, the SDN controller receives learned routes that are fed back by each VBR. The SDN controller performs a calculation for the learned routes using a routing controller. The routing controller automatically calculates routes of the traffic for each component of the system according to a user's intention during transmission. The routes are then sent to corresponding routing devices in a form of a strategy (i.e., a data forwarding strategy provided in the present application), and then the routing devices perform data forwarding according to corresponding strategies.

In summary, the routing controller in the network construction method provided by the present application may be set in the SDN controller, or may exist in the system in a form of a stand-alone device.

It should be noted that in the present application, a process of data traffic from VBR to VPC during a forwarding process can be realized through various system components. Transmission for the traffic forwarding between VBR and VBR can be performed through a direct connection between VBR and VBR, or transmission can be performed through routing via other system components.

Based on FIG. 3, different sites (sites A to D) of users in the network construction method provided by the present application can access different regions of the public cloud. Network interconnections located between different regions of the public cloud network are implemented by a service provider of the public cloud. The sites of the users in different regions are interconnected through public cloud network services.

In the network construction method provided in the present application, an enterprise private network is implemented through high-speed channels of a public cloud (i.e., a user's direct dedicated line is connected to the public cloud through a routing device (such as VBR)). The user's enterprise private network and the high-speed channels of the public cloud are combined into one. Furthermore, an automatic configuration of the user's private network is realized through an automatic learning and an automatic distribution of routes, allowing the user to quickly open the enterprise private network. In the present application, the automatic learning and the automatic distribution are realized by using the VBR to learn the routes, and using the routing controller in the SDN controller to calculate a route of data stream transmission.

The network construction method provided in the present application is different from the enterprise private network provided by the operator in the existing technologies, which is expensive, slow in an opening process, and is not able to be used on demand. The network construction method provided in the present application performs accesses using a dedicated line for interconnections, and is essentially a solution for cloudification of enterprise private network capabilities. Based on the above-mentioned route learning, API configuration, and route distribution, enterprise private network services described in the present application can be quickly opened, paid by volume, and do not require users to perform operation and maintenance, thus reducing the pressure and cost of user operation and maintenance.

In addition, this avoids the problem of no service quality guarantee for enterprise private networks operated and maintained by enterprises in the existing technologies. In the network construction method provided in the present application, service providers of public clouds provide service quality guarantees.

Similarly, this circumvents the existing technologies that Direct Connect being only used for interconnections between an enterprise and a public cloud, and cannot be used for interconnections between different regions of the enterprise. At present, all Direct Connect needs to be manually configured, and the cost of operation and maintenance is high. The network construction method provided by the present application provides the capabilities of an enterprise private network. The method also calculates a data flow using a routing controller in a SDN controller to obtain a route of the data flow in a transmission process, and sends the route in a form of a strategy (i.e., the data forwarding strategy provided in the present application) to a corresponding routing device. The routing device then performs data forwarding according to the strategy, which has an automatic configuration function for interconnections between different regions of the enterprise. This thus achieves the use of cloud computing technology to provide the enterprise private network services, enables it to have characteristics of fast opening, paying by volume, and QoS guarantee.

It should be noted that the foregoing method embodiments are expressed as a series of action combinations for the sake of simple description. However, one skilled in the art needs to know that the present invention is not limited by the described sequences of actions, because some steps can be performed in other order or in parallel according to the present invention. Secondly, one skilled in the art needs also to know that the embodiments described in the specification are all preferred embodiments. Actions and modules that are involved are not necessarily required by the present invention.

Through the description of the above embodiments, one skilled in the art can clearly understand that the network construction methods according to the above embodiments can be implemented by means of software plus necessary general hardware platform, and apparently can also be implemented by hardware. However, in many cases, the former is a better implementation. Based on such understanding, the essence of the technical solutions of the present invention or the part that contributes to the existing technology can be embodied in a form of a software product. Such computer software product is stored in a storage medium (such as ROM/RAM, a magnetic disk, an optical disc), and includes a number of instructions to cause a terminal device (which can be a mobile phone, a computer, a server, or a network device, etc.) to execute the method described in each embodiment of the present invention.

### Second Embodiment

According to the embodiments of the present invention, an apparatus for implementing the above-mentioned network construction method is also provided, as shown in FIG. 6. FIG. 6 is a schematic structural diagram of a network construction apparatus according to the second embodiment of the present invention. The apparatus includes:
an access module 62 configured to connect a direct dedicated line of a user to a cloud platform through a routing device; and a forwarding module 64 configured to forward data to a target region in the cloud platform through the routing device.

In the embodiments of the present invention, a direct dedicated line of a user is connected to a cloud platform through a routing device. An enterprise private network is realized by connecting the direct dedicated line of the user to the cloud platform through the routing device and through high-speed channels of a public cloud. The user's enterprise private network and the public cloud's high-speed channels are combined into one. An automatic configuration of the user's private network is realized from an automatic learning and an automatic distribution of routes, allowing the user to quickly open the enterprise private network. This thereby solves the problem in the existing technology that manual configuration is required for interconnections between different regions of an enterprise and construction problems exists in hybrid cloud environments, resulting in technical problems of high operation and maintenance costs and low operation efficiency.

### Third Embodiment

According to another aspect of the embodiments of the present invention, a network construction system is also provided, including: a cloud platform, routing devices, and user devices. The routing devices connect the user devices to the cloud platform through direct dedicated lines of users, and are configured to forward data that is sent by a user device to a target region in the cloud platform, wherein a public cloud, a virtual private network, and regions where users to be interacted are connected to the cloud platform, the regions where the users to be interacted are connected to the public cloud through the routing devices, and are connected to the virtual private network through routes between the routing devices.

A routing device is configured to learn route(s) of a network where a user is located using a network controller of a cloud network, obtain intercommunication intention(s) of the user according to the learned route(s), and generate a data forwarding strategy according to the intercommunication intention(s) of the user, and forward the data to the target region according to the data forwarding strategy.

Specifically, the routing device is respectively connected to the public cloud, the virtual private network and a region where a user to be interacted is located, and is configured to connect a direct dedicated line of a user to the public cloud and send the data to the target region, where the target region includes: one or a combination of at least two of the virtual private network, the area where the user to be interacted is located, or another cloud resource.

### Fourth Embodiment

According to still another aspect of the embodiments of the present invention, a routing device is also provided, which includes: a processor; and a memory coupled to the processor, and configured to provide the processor with instructions for processing the following processing steps: connecting a direct dedicated line of a user to a cloud platform through a routing device; and forwarding data to a target region through the routing device.

Optionally, the processor is configured to obtain route(s) according to a dynamic routing protocol that is operated between the user device and a cloud network; and perform learning based on the route(s); or obtain route(s) of calling a preset application programming interface by the user device; obtain, based on the obtained route(s), routes between the route(s) of the network where the user is located in the cloud network and regions where users to be interacted are located; and generate a data forwarding strategy using intercommunication intention(s) of the user obtained in advance by the routing device; and forward the data to the target region according to the data forwarding strategy.

### Fifth Embodiment

According to still another aspect of the embodiments of the present invention, a storage medium is also provided. The storage medium includes a stored program, wherein a device where the storage medium is located is controlled to execute the network construction method in the first embodiment when the program is running.

### Sixth Embodiment

According to another aspect of the embodiments of the present invention, a processor is also provided. The processor is configured to run a program, wherein the network construction method in the first embodiment is executed when the program is running.

### Seventh Embodiment

A storage medium may also be provided. Optionally, the storage medium may be used to store program codes executed by the network construction method provided in the first embodiment.

Optionally, in the present embodiment, the storage medium may be located in any routing device in a group of routing devices in a computer network, or in any mobile terminal in a group of mobile terminals.

Optionally, in the present embodiment, the storage medium is configured to store program codes used for executing the following steps: connecting a direct dedicated line of a user to a cloud platform through a routing device; and forwarding data to a target region through the routing device.

Optionally, in the present embodiment, the storage medium is configured to store program codes used for executing the following steps: the routing device includes: a dedicated line access router.

Optionally, in the present embodiment, the storage medium is set to store program codes used for executing the following steps: learning route(s) of a network where the user device is located using a network controller of a cloud network where the cloud platform is located before connecting the direct dedicated of the user to the cloud platform through the routing device.

Furthermore, optionally, in the present embodiment, the storage medium is configured to store program codes for executing the following steps: learning the route(s) of the network where the user device is located based on the cloud network where the cloud platform is located includes: obtaining route(s) of calling a preset application programming interface by the user device; and obtaining, based on the obtained route(s), routes between the route(s) of the network where the user device is located and regions where other users to be interacted with are located.

Optionally, in the present embodiment, the storage medium is configured to store program codes for executing the following steps: learning the route(s) of the network where the user device is located based on the cloud network where the cloud platform is located includes: obtaining route(s) based on a dynamic routing protocol that is operated between the user device and the cloud network; and performing the learning based on the route(s).

Optionally, in the present embodiment, the storage medium is configured to store program codes for performing the following steps: forwarding data to the target region in the cloud platform through the routing device includes: generating a data forwarding strategy using an intercommunication intention of the user obtained in advance through the routing device; forwarding the data to the target region according to the data forwarding strategy, wherein the target region includes one or a combination of at least two of: a virtual private network, a region where a user to be interacted is located, or another cloud resource.

Furthermore, optionally, in the present embodiment, the storage medium is configured to store program codes for executing the following steps: generating the data forwarding strategy using the intercommunication intention of the user obtained in advance through the routing device includes: receiving routing information sent by routing devices in respective regions where various users to be interacted are located; and performing a calculation based on the routing information to generate the data forwarding strategy by a software-defined network controller.

Optionally, in the present embodiment, the storage medium is configured to store program codes for executing the following steps: performing the calculation to generate the data forwarding strategy by the software-defined network controller includes: performing the calculation based on the routing information to generate the data forwarding strategy a routing controller in the software-defined network controller.

Furthermore, optionally, in the present embodiment, the storage medium is configured to store program codes for performing the following steps: forwarding the data to the target region according to the data forwarding strategy includes: sending the data forwarding strategy to a corresponding routing device; and forwarding the data to the target region through the routing device.

Sequence numbers of the foregoing embodiments of the present invention are only intended for description, and do not represent the qualities of the embodiments.

In the above-mentioned embodiments of the present invention, a description of each embodiment has its own focus. For parts that are not described in detail in an embodiment, reference may be made to related descriptions of other embodiments.

In the embodiments provided in the present application, it needs to be understood that the disclosed technical content can be implemented in other ways. The apparatus embodiments described above are only illustrative. For example, a division of units is only a division of logical functions. In practical implementations, other methods of division may exist. For example, multiple units or components may be combined or may be Integrated into another system, or some features may be ignored or not performed. In addition, mutual coupling, direct coupling, or communication connection that is displayed or discussed may be indirect coupling or communication connection through some interfaces, units or modules, and may be in electrical or other forms.

The units described as separate components may or may not be physically separated. The components displayed as units may or may not be physical units, i.e., may be located in one place, or may be distributed among multiple network units. Some or all of the units may be selected according to actual needs to achieve the objectives of the solutions of the embodiments.

In addition, the functional units in each embodiment of the present invention may be integrated into one processing unit. Alternatively, each unit may exist alone physically. Alternatively, two or more units may be integrated into one unit. The above-mentioned integrated unit can be implemented in a form of hardware or software functional unit.

The integrated unit, if being implemented in a form of a software functional unit and sold or used as an independent product, can be stored in a computer readable storage medium. Based on such understanding, the essence of the technical solution of the present invention, or the part that contributes to the existing technologies, or all or part of the technical solutions can be embodied in a form of a software product. Such computer software product is stored in a storage medium, and includes a number of instructions to cause a computing device (which can be a personal computer, a server, or a network device, etc.) to execute all or part of the steps of the method described in each embodiment of the present invention. The storage media include various types of media that are capable of storing program codes, such as a flash disk, read-only memory (ROM), random access memory (RAM), a mobile hard disk, a magnetic disk, or an optical disk.

The above corresponds to the preferred embodiments of the present invention only. It should be noted that one of ordinary skill in the art can make a number of improvements and modifications without departing from the principles of the present invention.

## Claims

1. A network construction method for a hybrid cloud environment, the method being implemented by a routing device (10; VBR) and a software-defined network controller (SDN controller), the method comprising:
the routing device (10; VBR) learning routes of a user private network where a user device is located and feeding the learned routes to the software-defined network controller (SDN controller) of a public cloud network where a public cloud platform is located;
connecting (S202) a direct dedicated line of a user to the public cloud platform through the routing device (10; VBR) wherein the direct dedicated line directly connects the user private network where the user device is located with the routing device (10; VBR); and
forwarding (S204) data to a target region in the public cloud platform through the routing device (10; VBR); said forwarding (S204) comprising generating by the software-defined network controller (SDN controller) a data forwarding strategy using intercommunication intentions of the user that are obtained in advance through the routing device (10; VBR) and forwarding the data to the target region according to the data forwarding strategy.

2. The network construction method of claim 1, wherein the routing device (10; VBR) comprises a dedicated line access router.

3. The network construction method of claim 1, wherein learning the routes of the user private network where the user device is located and feeding the learned routes to the software-defined network controller (SDN controller) of the cloud network where the cloud platform is located comprises:
obtaining routes of calling a preset application programming interface by the user device; and
obtaining, based on the obtained routes, routes between the routes of the user private network where the user is located in the cloud network and regions where other users to be interacted with.

4. The network construction method of claim 1, wherein learning the routes of the user private network where the user device is located and feeding the learned routes to the software-defined network controller (SDN controller) of the cloud network where the cloud platform is located comprises:
obtaining routes according to a dynamic routing protocol that operates between the user device and the cloud network; and
performing the learning according to the routes.

5. The network construction method of any one of claims 1-4, wherein the target region comprises: one or a combination of at least two of a virtual private network, a region where a user to be interacted is located, or another cloud resource.

6. The network construction method of claim 1, wherein generating the data forwarding strategy based on the intercommunication intentions of the user that are obtained in advance through the routing device (10; VBR) comprises:
receiving routing information sent by routing devices (10; VBR) in a respective region where each user to be interacted is located; and
performing a calculation using said software-defined network controller (SDN controller) to generate the data forwarding strategy based on the routing information.

7. The network construction method of claim 6, wherein performing the calculation using the software-defined network controller (SDN controller) to generate the data forwarding strategy based on the routing information comprises:
calculating by a routing controller in the software-defined network controller (SDN controller) based on the routing information to generate the data forwarding strategy.

8. The network construction method of claim 7, wherein forwarding the data to the target region according to the data forwarding strategy comprises:
sending the data forwarding strategy to a corresponding routing device (10; VBR); and
forwarding the data to the target region through the routing device (10; VBR).

9. A hybrid cloud environment routing device (10; VBR) comprising:
a processor (102); and
a memory (104) coupled to the processor (102), and configured to provide the processor (102) with instructions for processing the following processing steps:
learning routes of a user private network where a user is located and feeding the learned routes to a software-defined network controller (SDN controller) of a cloud network where a public cloud platform is located;
connecting (S202) a direct dedicated line of the user to the public cloud platform through the routing device (10; VBR) wherein the direct dedicated line directly connects the user private network where a user device is located with the routing device (10; VBR); and
forwarding (S204) data to a target region in the public cloud platform through the routing device (10; VBR) based on a data forwarding strategy generated by the software-defined network controller (SDN controller) using user intercommunication intentions that are obtained in advance by the routing device (10; VBR) and forward the data to the target region according to the data forwarding strategy.

10. The routing device of claim 9, wherein the routing device (10; VBR) comprises a dedicated line access router.

11. The routing device (10; VBR) of claim 9 or 10, wherein the processor (102) is configured to obtain said routes according to a dynamic routing protocol that is operated between the user device and a cloud network; perform said learning based on the routes; or obtain said routes of calling a preset application programming interface by the user device; obtain, based on the obtained routes, routes between the routes of the user private network where the user is located in the cloud network and regions where users to be interacted are located.

12. A hybrid cloud environment network construction system comprising:
a public cloud platform, said routing device (10; VBR) according to any of the claims 9 to 11, and a user device, the routing device (10; VBR) connecting (S202) the user device to the public cloud platform through the direct dedicated line of the user to forward (S204) the data sent by the user device to the target region in the cloud platform, wherein the routing device (10; VBR) is configured to obtain the intercommunication intentions of the user according to the learned routes for the software-defined network controller (SDN controller) to generate the data forwarding strategy.

13. The network construction system of claim 12, wherein generating by the software-defined network controller (SDN controller) the data forwarding strategy according to the intercommunication intentions of the user comprises:
receiving routing information sent by routing devices (10; VBR) in a respective region where each user to be interacted is located; and
performing a calculation using the software-defined network controller (SDN controller) to generate the data forwarding strategy based on the routing information.

## Patentansprüche

1. Verfahren zum Aufbau eines Netzwerks für eine Hybrid-Cloud-Umgebung, wobei das Verfahren von einer Routing-Einrichtung (10; VBR) und einem Software-Defined-Networking-Controller (SDN-Controller) ausgeführt wird und das Verfahren Folgendes umfasst:
die Routing-Einrichtung (10; VBR) erlernt Routen eines privaten Benutzernetzwerks, in dem sich ein Benutzergerät befindet, und übermittelt die erlernten Routen an den Software-Defined-Networking-Controller (SDN-Controller) eines öffentlichen Cloud-Netzwerks, in dem sich eine öffentliche Cloud-Plattform befindet;
Verbinden (S202) einer direkten Standleitung eines Benutzers mit der öffentlichen Cloud-Plattform über die Routing-Einrichtung (10; VBR), wobei die direkte Standleitung das private Benutzernetzwerk, in dem sich das Benutzergerät befindet, direkt mit der Routing-Einrichtung (10; VBR) verbindet; und
Weiterleiten (S204) von Daten an eine Zielregion in der öffentlichen Cloud-Plattform über die Routing-Einrichtung (10; VBR); wobei das Weiterleiten (S204) umfasst, dass der Software-Defined-Networking-Controller (SDN-Controller) eine Datenweiterleitungsstrategie unter Verwendung von Kommunikationsabsichten des Benutzers generiert, die im Voraus über die Routing-Einrichtung (10; VBR) ermittelt werden, und die Daten gemäß der Datenweiterleitungsstrategie an die Zielregion weiterleitet.

2. Verfahren zum Aufbau eines Netzwerks nach Anspruch 1, wobei die Routing-Einrichtung (10; VBR) einen Router für den Zugang über eine Standleitung umfasst.

3. Verfahren zum Aufbau eines Netzwerks nach Anspruch 1, wobei das Erlernen der Routen des privaten Benutzernetzwerks, in dem sich das Benutzergerät befindet, und das Übermitteln der erlernten Routen an den Software-Defined-Networking-Controller (SDN-Controller) des Cloud-Netzwerks, in dem sich die Cloud-Plattform befindet, umfasst:
Ermitteln von Routen durch den Aufruf einer voreingestellten Anwendungsprogrammierschnittstelle durch das Benutzergerät; und
Ermitteln, auf der Grundlage der ermittelten Routen, von Routen zwischen den Routen des privaten Benutzernetzwerks, in dem sich der Benutzer im Cloud-Netzwerk befindet, und Regionen, in denen sich andere Benutzer befinden, mit denen eine Interaktion stattfinden soll.

4. Verfahren zum Aufbau eines Netzwerks nach Anspruch 1, wobei das Erlernen der Routen des privaten Benutzernetzwerks, in dem sich das Benutzergerät befindet, und das Übermitteln der erlernten Routen an den Software-Defined-Networking-Controller (SDN-Controller) des Cloud-Netzwerks, in dem sich die Cloud-Plattform befindet, umfasst:
Ermitteln von Routen gemäß einem dynamischen Routing-Protokoll, das zwischen dem Benutzergerät und dem Cloud-Netzwerk operiert; und
Durchführen des Erlernens gemäß den Routen.

5. Verfahren zum Aufbau eines Netzwerks nach einem der Ansprüche 1 - 4, wobei die Zielregion Folgendes umfasst: ein virtuelles privates Netzwerk, eine Region, in der sich ein Benutzer befindet, mit dem interagiert werden soll, oder eine andere Cloud-Ressource, oder eine Kombination aus mindestens zwei davon.

6. Verfahren zum Aufbau eines Netzwerks nach Anspruch 1, wobei das Generieren der Datenweiterleitungsstrategie auf der Grundlage der Kommunikationsabsichten des Benutzers, die im Voraus über die Routing-Einrichtung (10; VBR) ermittelt werden, umfasst:
Empfangen von Routing-Informationen, die von Routing-Einrichtungen (10; VBR) in einer jeweiligen Region gesendet werden, in der sich jeder Benutzer befindet, mit dem eine Interaktion stattfinden soll; und
Durchführen einer Berechnung unter Verwendung des Software-Defined-Networking-Controllers (SDN-Controller), um die Datenweiterleitungsstrategie auf der Grundlage der Routing-Informationen zu generieren.

7. Verfahren zum Aufbau eines Netzwerks nach Anspruch 6, wobei das Durchführen der Berechnung unter Verwendung des Software-Defined-Networking-Controllers (SDN-Controller) zum Generieren der Datenweiterleitungsstrategie auf der Grundlage der Routing-Informationen umfasst:
Berechnen durch einen Routing-Controller im Software-Defined-Networking-Controller (SDN-Controller) auf der Grundlage der Routing-Informationen, um die Datenweiterleitungsstrategie zu generieren.

8. Verfahren zum Aufbau eines Netzwerks nach Anspruch 7, wobei das Weiterleiten der Daten an die Zielregion gemäß der Datenweiterleitungsstrategie umfasst:
Senden der Datenweiterleitungsstrategie an eine entsprechende Routing-Einrichtung (10; VBR); und
Weiterleiten der Daten an die Zielregion über die Routing-Einrichtung (10; VBR).

9. Routing-Einrichtung (10; VBR) für eine Hybrid-Cloud-Umgebung, umfassend:
einen Prozessor (102); und
einen mit dem Prozessor (102) gekoppelten Speicher (104), der so konfiguriert ist, dass er dem Prozessor (102) Befehle zur Verarbeitung der folgenden Verarbeitungsschritte bereitstellt:
Erlernen von Routen eines privaten Benutzernetzwerks, in dem sich ein Benutzer befindet, und Übermitteln der erlernten Routen an einen Software-Defined-Networking-Controller (SDN-Controller) eines Cloud-Netzwerks, in dem sich eine öffentliche Cloud-Plattform befindet;
Verbinden (S202) einer direkten Standleitung des Benutzers mit der öffentlichen Cloud-Plattform über die Routing-Einrichtung (10; VBR), wobei die direkte Standleitung das private Benutzernetzwerk, in dem sich ein Benutzergerät befindet, direkt mit der Routing-Einrichtung (10; VBR) verbindet; und
Weiterleiten (S204) von Daten an eine Zielregion in der öffentlichen Cloud-Plattform über die Routing-Einrichtung (10; VBR) auf der Grundlage einer vom Software-Defined-Networking-Controller (SDN-Controller) generierten Datenweiterleitungsstrategie unter Verwendung von Kommunikationsabsichten, die zuvor von der Routing-Einrichtung (10; VBR) ermittelt werden, und Weiterleiten der Daten an die Zielregion gemäß der Datenweiterleitungsstrategie.

10. Routing-Einrichtung nach Anspruch 9, wobei die Routing-Einrichtung (10; VBR) einen Router für den Zugang über eine Standleitung umfasst.

11. Routing-Einrichtung (10; VBR) nach Anspruch 9 oder 10, wobei der Prozessor (102) so konfiguriert ist, dass er diese Routen gemäß einem dynamischen Routing-Protokoll ermittelt, das zwischen dem Benutzergerät und einem Cloud-Netzwerk operiert; das Erlernen auf der Grundlage der Routen durchführt; oder diese Routen durch den Aufruf einer voreingestellten Anwendungsprogrammierschnittstelle durch das Benutzergerät ermittelt; auf der Grundlage der ermittelten Routen Routen zwischen den Routen des privaten Benutzernetzwerks, in dem sich der Benutzer im Cloud-Netzwerk befindet, und Regionen, in denen sich Benutzer befinden, mit denen eine Interaktion stattfinden soll, ermittelt.

12. System zum Aufbau eines Netzwerks in einer Hybrid-Cloud-Umgebung, umfassend:
eine öffentliche Cloud-Plattform, die Routing-Einrichtung (10; VBR) gemäß einem der Ansprüche 9 bis 11 und ein Benutzergerät, wobei die Routing-Einrichtung (10; VBR) das Benutzergerät über die direkte Standleitung des Benutzers mit der öffentlichen Cloud-Plattform verbindet (S202), um die vom Benutzergerät gesendeten Daten an die Zielregion in der Cloud-Plattform weiterzuleiten (S204), wobei die Routing-Einrichtung (10; VBR) so konfiguriert ist, dass sie die Kommunikationsabsichten des Benutzers gemäß den erlernten Routen für den Software-Defined-Networking-Controller (SDN-Controller) ermittelt, um die Datenweiterleitungsstrategie zu generieren.

13. System zum Aufbau eines Netzwerks nach Anspruch 12, wobei das Generieren der Datenweiterleitungsstrategie durch den Software-Defined-Networking-Controller (SDN-Controller) gemäß den Kommunikationsabsichten des Benutzers umfasst:
Empfangen von Routing-Informationen, die von den Routing-Einrichtungen (10; VBR) in einer jeweiligen Region gesendet werden, in der sich jeder Benutzer befindet, mit dem eine Interaktion stattfinden soll; und
Durchführen einer Berechnung unter Verwendung des Software-Defined-Networking-Controllers (SDN-Controller), um die Datenweiterleitungsstrategie auf der Grundlage der Routing-Informationen zu generieren.

## Revendications

1. Procédé de construction de réseau pour un environnement de cloud hybride, le procédé étant mis en œuvre par un dispositif de routage (10 ; VBR) et un contrôleur de réseau défini par logiciel (contrôleur SDN), le procédé comprenant :
le dispositif de routage (10 ; VBR) apprend les routes d'un réseau privé d'utilisateur où se trouve un dispositif d'utilisateur et transmet les routes apprises au contrôleur de réseau défini par logiciel (contrôleur SDN) d'un réseau de cloud public où se trouve une plateforme de cloud public ;
la connexion (S202) d'une ligne dédiée directe d'un utilisateur à la plateforme de cloud public via le dispositif de routage (10 ; VBR), la ligne dédiée directe reliant directement le réseau privé de l'utilisateur, dans lequel se trouve le dispositif de l'utilisateur, au dispositif de routage (10 ; VBR) ; et
le transfert (S204) des données vers une région cible au sein de la plateforme de cloud public via le dispositif de routage (10 ; VBR) ; ledit transfert (S204) comprenant la génération, par le contrôleur de réseau défini par logiciel (contrôleur SDN), d'une stratégie de transfert de données utilisant les intentions de communication de l'utilisateur obtenues au préalable via le dispositif de routage (10 ; VBR), et le transfert des données vers la région cible conformément à ladite stratégie de transfert de données.

2. Procédé de construction de réseau selon la revendication 1, dans lequel le dispositif de routage (10 ; VBR) comprend un routeur d'accès à ligne dédiée.

3. Procédé de construction de réseau selon la revendication 1, dans lequel l'apprentissage des routes du réseau privé de l'utilisateur où se trouve le dispositif de l'utilisateur et la transmission des routes apprises au contrôleur de réseau défini par logiciel (contrôleur SDN) du réseau cloud où se trouve la plateforme cloud comprennent :
l'obtention des routes par l'appel d'une interface de programmation d'application prédéfinie par le dispositif utilisateur ; et
l'obtention, sur la base des routes obtenues, de routes reliant les routes du réseau privé de l'utilisateur, où se trouve l'utilisateur, au sein du réseau cloud, et les régions où se trouvent les autres utilisateurs avec lesquels une interaction doit avoir lieu.

4. Procédé de construction de réseau selon la revendication 1, dans lequel l'apprentissage des routes du réseau privé de l'utilisateur où se trouve le terminal de l'utilisateur et la transmission des routes ainsi apprises au contrôleur de réseau défini par logiciel (contrôleur SDN) du réseau cloud où se trouve la plateforme cloud, comprenant :
l'obtention de routes selon un protocole de routage dynamique fonctionnant entre le dispositif utilisateur et le réseau cloud ; et
effectuer l'apprentissage en fonction des routes.

5. Procédé de construction de réseau selon l'une quelconque des revendications 1 à 4, dans lequel la région cible comprend : un réseau privé virtuel, une région où se trouve un utilisateur avec lequel une interaction doit avoir lieu, ou une autre ressource cloud, ou une combinaison d'au moins deux de ces éléments.

6. Procédé de construction de réseau selon la revendication 1, dans lequel la génération de la stratégie de transfert de données sur la base des intentions de communication de l'utilisateur obtenues à l'avance par l'intermédiaire du dispositif de routage (10 ; VBR) comprend :
la réception d'informations de routage envoyées par des dispositifs de routage (10 ; VBR) dans une région respective où se trouve chaque utilisateur avec lequel une interaction doit avoir lieu ; et
effectuer un calcul à l'aide dudit contrôleur de réseau défini par logiciel (contrôleur SDN) afin de générer la stratégie de transfert de données sur la base des informations de routage.

7. Procédé de construction de réseau selon la revendication 6, dans lequel l'exécution du calcul à l'aide du contrôleur de réseau défini par logiciel (contrôleur SDN) pour générer la stratégie de transfert de données sur la base des informations de routage comprend :
le calcul, par un contrôleur de routage au sein du contrôleur de réseau défini par logiciel (contrôleur SDN), sur la base des informations de routage, afin de générer la stratégie de transfert de données.

8. Procédé de construction de réseau selon la revendication 7, dans lequel le transfert des données vers la région cible conformément à la stratégie de transfert de données comprend :
l'envoi de la stratégie de transfert de données à un dispositif de routage correspondant (10 ; VBR) ; et
le transfert des données vers la région cible via le dispositif de routage (10 ; VBR).

9. Dispositif de routage (10 ; VBR) pour environnement cloud hybride, comprenant :
un processeur (102) ; et
une mémoire (104) couplée au processeur (102) et configurée pour fournir au processeur (102) des instructions permettant d'exécuter les étapes de traitement suivantes :
l'apprentissage des routes d'un réseau privé d'utilisateur sur lequel se trouve un utilisateur et la transmission des routes apprises à un contrôleur de réseau défini par logiciel (contrôleur SDN) d'un réseau cloud sur lequel se trouve une plateforme cloud publique ;
la connection (S202) une ligne dédiée directe de l'utilisateur à la plateforme de cloud public via le dispositif de routage (10 ; VBR), la ligne dédiée directe reliant directement le réseau privé de l'utilisateur, où se trouve un dispositif de l'utilisateur, au dispositif de routage (10 ; VBR) ; et
le transfert (S204) des données vers une région cible au sein de la plateforme de cloud public via le dispositif de routage (10 ; VBR) sur la base d'une stratégie de transmission de données générée par le contrôleur de réseau défini par logiciel (contrôleur SDN) utilisant les intentions d'intercommunication de l'utilisateur obtenues au préalable par le dispositif de routage (10 ; VBR) et de transférer les données vers la région cible conformément à ladite stratégie de transfert de données.

10. Dispositif de routage selon la revendication 9, dans lequel le dispositif de routage (10 ;
VBR) comprend un routeur d'accès à ligne dédiée.

11. Dispositif de routage (10 ; VBR) selon la revendication 9 ou 10, dans lequel le processeur (102) est configuré pour obtenir lesdites routes selon un protocole de routage dynamique exploité entre le dispositif utilisateur et un réseau cloud ; effectuer ledit apprentissage sur la base des routes ; ou obtenir lesdites routes en appelant une interface de programmation d'application prédéfinie par le dispositif utilisateur ; obtenir, sur la base des routes obtenues, des routes entre les routes du réseau privé de l'utilisateur, où celui-ci se trouve dans le réseau cloud, et les régions où se trouvent les utilisateurs avec lesquels une interaction doit avoir lieu.

12. Système de construction de réseau dans un environnement cloud hybride, comprenant :
une plateforme de cloud public, ledit dispositif de routage (10 ; VBR) selon l'une quelconque des revendications 9 à 11, et un dispositif utilisateur, le dispositif de routage (10 ; VBR) connectant (S202) le dispositif utilisateur à la plateforme de cloud public via la ligne dédiée directe de l'utilisateur afin de transférer (S204) les données envoyées par le dispositif utilisateur vers la région cible au sein de la plateforme de cloud, dans lequel le dispositif de routage (10 ; VBR) est configuré pour obtenir les intentions de communication de l'utilisateur en fonction des routes apprises, afin que le contrôleur de réseau défini par logiciel (contrôleur SDN) génère la stratégie de transfert de données.

13. Système de construction de réseau selon la revendication 12, dans lequel la génération, par le contrôleur de réseau défini par logiciel (contrôleur SDN), de la stratégie de transfert de données en fonction des intentions de communication de l'utilisateur comprend :
la réception d'informations de routage envoyées par des dispositifs de routage (10 ; VBR) dans une région respective où se trouve chaque utilisateur avec lequel une interaction doit avoir lieu ; et
effectuer un calcul à l'aide du contrôleur de réseau défini par logiciel (contrôleur SDN) afin de générer la stratégie de transfert de données sur la base des informations de routage.
